# EUROPEAN PATENT SPECIFICATION

(11) **EP 3 009 945 B1**
(45) Date of publication and mention of the grant of the patent: **13.05.2020**
(21) Application number: 15182095.8
(22) Date of filing: 24.08.2015
(51) Int. Cl.: G06F 30/00

(54) **FIELD ROSETTE MAPPING FOR FIBER COMPOSITE PART DESIGN**
FELDROSETTENVERGLEICH FÜR DEN ENTWURF VON FASERVERBUNDTEILEN
COMPARAISON DES ROSETTES DE CHAMP POUR CONCEPTION DE PIÈCES COMPOSITES EN FIBRES

(30) Priority: 29.08.2014 US 201414473167
(43) Date of publication of application: 20.04.2016
(73) Proprietor: Siemens Industry Software Inc., Plano, TX 75024-6612 (US)
(72) Inventor: FLORY, Robert S., Concord, MA Massachusetts 01742 (US); LUBY, Steven Christopher, Brookline, MA Massachusetts 02467 (US); SANTIAGO, Nabori, Histon Cambridgeshire, CB24 9HD (GB)
(74) Representative: Isarpatent

(56) References cited:
- US-A1- 2013 231 902
- RAIMUND ROLFES ET AL: "New Design Tools for Lightweight Aerospace Structures", CONFERENCE PROCEEDINGS. SEVENTH INTERNATIONAL CONFERENCE ON COMPUTATIONAL STRUCTURES TECHNOLOGY, 2004-09-07 - 2004-09-09, LISSABON, PORTUGAL, , 7 September 2004 (2004-09-07), pages 1-13, XP002699767, Retrieved from the Internet: URL:http://www.dlr.de/fa/Portaldata/17/Res ources/dokumente/institut/2004/s2004_7.pdf [retrieved on 2013-06-28]
- KHANI A ET AL: "Design of variable stiffness panels for maximum strength using lamination parameters", COMPOSITES PART B: ENGINEERING, ELSEVIER, UK, vol. 42, no. 3, 9 November 2010 (2010-11-09), pages 546-552, XP028360123, ISSN: 1359-8368, DOI: 10.1016/J.COMPOSITESB.2010.11.005 [retrieved on 2010-11-16]
- GHIASI H ET AL: "Optimum stacking sequence design of composite materials Part II: Variable stiffness design", COMPOSITE STRUCTURES, ELSEVIER SCIENCE LTD, GB, vol. 93, no. 1, 1 December 2010 (2010-12-01), pages 1-13, XP027183013, ISSN: 0263-8223 [retrieved on 2010-07-30]
- TOSH M W ET AL: "On the design, manufacture and testing of trajectorial fibre steering for carbon fibre composite laminates", COMPOSITES PART A: APPLIED SCIENCE AND MANUFACTURING, ELSEVIER SCIENCE PUBLISHERS B.V., AMSTERDAM, NL, vol. 31, no. 10, 1 October 2000 (2000-10-01), pages 1047-1060, XP004214179, ISSN: 1359-835X, DOI: 10.1016/S1359-835X(00)00063-4

## Description

### TECHNICAL FIELD

The present disclosure is directed, in general, to computer-aided design, visualization, and manufacturing systems ("CAD systems"), product lifecycle management ("PLM") systems, and similar systems, that manage data for products and other items (collectively, "Product Data Management" systems or PDM systems), and in particular to PDM systems for designing, visualizing, and simulating fiber-based composite materials.

### BACKGROUND OF THE DISCLOSURE

PDM systems manage PLM and other data. Improved systems are desirable. Patent document US 2013/231902 A1 (LUBY STEVEN [US] ET AL) 5 September 2013 discloses a manner of defining desired fiber orientations within a part. A spine-based rosette for the part model is defined, and the part is simulated and displayed according to the part model, the material, the spine and the spine-based rosette by displaying in-plane and out-of-plane curvatures of the part, where the rosette indicates fiber orientations for the part model at a point along the spine. The spine-based rosette can therefore be used by a user to specify the desired fiber orientations at any point or can be determined by the system based on the spine path. Once determined for one or more points along the spine, the spine-based rosette data can be stored by the system as associated with the part model or the spine on the part model, and thus can be accessed and used by other systems, including but not limited to downstream manufacturing and analysis systems.

### SUMMARY OF THE DISCLOSURE

Disclosed embodiments include systems and methods according to the appended claims.

In some embodiments, the method includes calculating a field rosette at an arbitrary point on the manufacturable part based on a received fiber orientation field. With this, the system can compare the first and second fiber orientation fields at a point that isn't provided in either fiber orientation field as it is received. The system can also use the provided fiber orientation field data for measurements of a simulated part at any point on the part. In some embodiments, the field rosette is represented by an axis system that includes the reference point and direction vector.

The foregoing has outlined rather broadly the features of an embodiment of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have a property of, or the like; and the term "controller" means any device, system or part thereof that controls at least one operation, whether such a device is implemented in hardware, firmware, software, or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates a field rosette in accordance with disclosed embodiments;
Figure 3A illustrates a first fiber orientation field of reference orientations in accordance with disclosed embodiments;
Figure 3B illustrates a second fiber orientation field of reference orientations in accordance with disclosed embodiments;
Figure 3C illustrates an interpolation of the first fiber orientation field at an arbitrary point in accordance with disclosed embodiments;
Figure 3D illustrates a comparison of the first fiber orientation field and the second fiber orientation field in accordance with disclosed embodiments; and
Figure 4 illustrates a flowchart of a process in accordance with disclosed embodiments.

### DETAILED DESCRIPTION

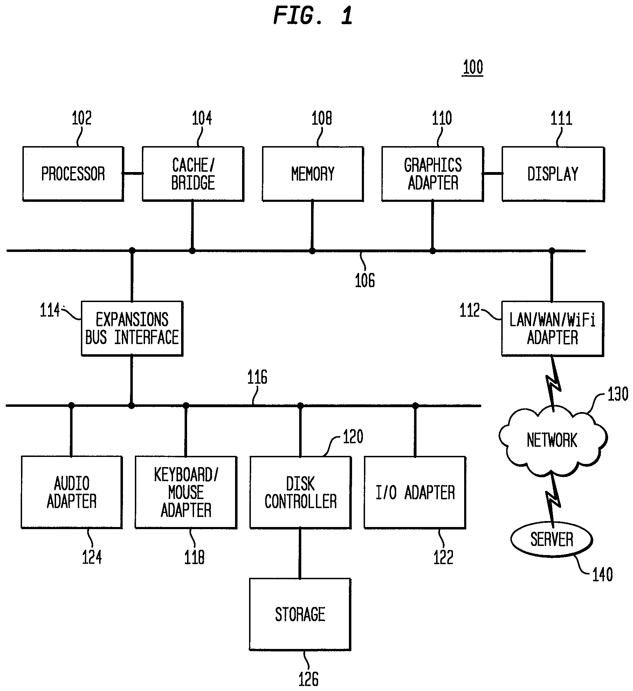

Figures 1-4, the discussion below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

A longstanding problem in the design, analysis, and manufacture of composite parts is that what is produced often does not match what was designed and analyzed. This is because the traditional view of product development generally assumes uniformity in the materials, such as metal or plastic, and that artifacts of the design do not significantly alter the material performance providing certain design rules are followed, such as avoiding stress concentrations. With composites, the shape of the part affects the orientation of the fibers within the composite in all but the simplest of parts. This effect is rarely considered in the analysis phases of the part development, because fully integrating composites part design in such a way that all the aspects of making parts with these engineered materials is taken into account would be a daunting challenge. It also presents a paradox in that one cannot know the manufacturing outcome before the design is begun. An additional issue is that there is no uniform way for the analysis phase to clearly communicate the intended fiber directions to the manufacturing phase. Generally, the manufacturing phase is only given the coordinate system at the origin and possibly a couple other points with no other information on the analyst/designer's intent in the space between those points.

Disclosed embodiments mitigate or eliminate these problems by use a new reference coordinate system for the composites that is based on a fiber orientation field of reference orientations derived from either the computer-aided engineering (CAE) models or part measurements "on the floor" or from a simulation. These can be represented as axis systems or other ways of communicating a location and reference direction, as described herein. Each of the reference orientations are referred to herein as a "field rosette." The field rosettes can be used by an engineer to check and adjust the design in order to meet the explicit specifications from CAE for fiber orientation everywhere on the part, and also to check and compare the design or CAE specification against as-manufactured data measured on the final parts. In the case of reading in data from a manufacturable part, the reference orientations can correspond to fiber directions.

Various embodiments disclosed herein describe systems and methods that provide risk-reducing solutions for industries including those employing composites engineering. Various embodiments enable aerospace, automotive, marine, wind energy, and other industries to optimize weigh, cost, and performance of composite parts by ensuring fiber orientation matches specifications and to reduce manufacturing flaws such as buckling and delamination.

Disclosed embodiments help reduce risk throughout the aerospace, automotive, marine, wind energy, and other industries by assisting the user in optimizing the design and manufacture of innovative, durable, and lightweight composite structures. Systems and methods disclosed herein reduce uncertainty in the performance of composite parts by defining, communicating, and validating desired fiber orientations throughout the product development process, ensuring that they meet specifications. By eliminating design interpretation errors, these techniques significantly reduce the risk of producing over-engineered parts that not only behave unpredictably but are also heavier and more costly than necessary.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system illustrated includes a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example illustrated is audio adapter 124, to which speakers (not illustrated) may be connected for playing sounds. Keyboard/mouse adapter 118 provides a connection for a pointing device (not illustrated), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Structural composite parts in aerospace, automotive, and other industries are often designed so that the fibers, and even the part itself, follow a particular load path. The need to follow the load path results in part shapes that are rarely entirely straight. A combination of the shape of the geometry, material selection, and desired fiber orientation can lead to in-plane and out-of-plane buckling of fibers, as well as localized deformation within the part. Fiber buckling and localized deformation can lead to unacceptable loss of strength at critical locations in the part.

Large curved panel or shell parts in aerospace, wind and marine assemblies are often manufactured by laying large courses of material. Layup of the first course of material is often driven by manufacturability from a part edge or scribe line. Panel or shell curvature forces fibers to be strained by deviating from their natural path within the originally applied course. Subsequent courses are butted or overlapped and continue to force, and in some cases, amplify fiber strain, leading to fiber buckling and localized deformation. Such defects lead to quality and safety issues that must be addressed, and their discovery during manufacturing, rather than during design, leads to costly waste, inefficiency, part redesign, inconsistency, poor quality, and decreased throughput. One way to address such fiber strain issues is to splice the composite materials cutting across the fibers rather than along the fibers. By doing this, the buildup of fiber strain is relieved. The fibers in the adjacent spliced course will no longer follow the direction of the original course. Thus, this reduces the strength of the part because fibers have been cut to create the adjacent course and fibers are no longer locally "parallel." Such a solution can result in dramatically different fiber orientations at different locations.

Composite analysts define desired fiber orientations within a part in order to achieve performance based on forces and pressures exerted on the part. Opportunities for greater part optimization are available, but that requires communicating desired part fiber orientations downstream to design and manufacturing. Removing ambiguity can result in the achievement of lower weight and lower cost products that meet part performance.

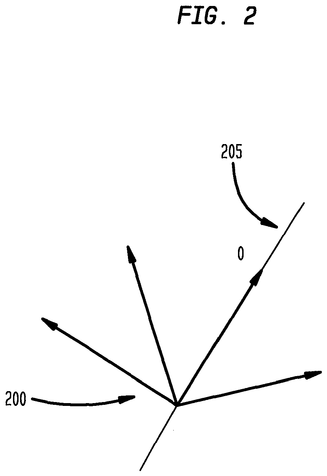

Figure 2 illustrates a single data point of a field rosette 200 in accordance with disclosed embodiments. Such a field rosette 200 is used to identify fiber directions and orientations in a single composite ply of a product model at a single point. The same data could be used in one or more composite plies, if a consistent coordinate system at each point is desired. In this figure, the "0 direction" 205 represents the principal fiber orientation and is preferably directed along the load path. In most cases, the 0 direction fiber orientation provides the greatest strength of the material for the given load. The other three fiber orientation directions are defined within a plane and with respect to the 0 direction. As illustrated in Fig. 2, the other three fiber orientation directions are, for example, at +45°, -45°, and 90° with respect to the 0 direction 205, in the plane of the material, and can include other fiber orientation directions, since materials exist with other angles between fibers (i.e. 30°). The field rosette and corresponding orientation(s) can also be represented in other ways, such as by an axis system at each location with one of the axes aligned to the 0 direction, by two points, where one point represents the location and the other point indicates the vector direction, a curve in space sampled at certain locations, a series of points such as a polyline, or otherwise. An axis system, for example, can be understood to represent the reference point at the axis origin with a fiber-orientation direction vector in the direction of one of the axes.

Note that the other three fiber orientation directions need not be explicitly stored as the field rosette data, since they can be derived from the 0 direction. Directions can be computed as a right hand coordinate system or left hand coordinate system. In some cases, the imported directions cannot be computed, such as when reading data from a manufactured composite part, since the orientations will not be at the specified angles due to deformation. In such cases, the orientations can be directly measured.

The field rosette data can comprise the location of the point defining the rosette and the corresponding direction vector. The field rosette data may possibly also include the corresponding normal vector, the +/-45° vectors, or other information. Some non-limiting examples of other information that could be included are physical information, such as fiber direction vectors or other values that describe something about the physical setup of the part at that location, non-physical information, such as an index or Boolean that describes whether each point is in a "critical" area with little tolerance for deviation, or an explicit definition of the deviation tolerances at each provided point. Locations may have deviation tolerances assigned to them or may be grouped into regions where a certain deviation tolerance is applied.

Laminated composite parts consist of plies of composite material laid down on a tool in a given sequence. A typical example of composite material consists of continuous reinforcement fibers in a polymer matrix. The orientation of the reinforcement fibers plays a crucial role in the structural performance of a part, as the fibers carry the loads to which the part will be subjected.

In the structural analysis of such parts using finite element analysis (FEA), the finite element model is typically set up in such a way that fiber orientations for each ply are controlled on a per-element basis. The orientations derive from a material coordinate system attached to each element, and those material coordinate systems are typically controlled through various mapping techniques using one or more coordinate systems. These mappings can be cartesian, cylindrical, radial or whatever scheme is implemented in the system. Additionally, these coordinate systems can often be manually changed for each element, meaning that it could completely change from any given mapping system. Such orientations as referred to herein as the "specified" or "assumed" orientations. Naturally, this can result in specification of orientations that is non-physical, and difficult to achieve in the real world.

In a typical process, when the product design is completed using FEA tools, the CAD designer uses a data processing system to convert the engineering output into a CAD-related manufacturable composite part design such as a CAE design. The CAE design should be as close to the FEA design as possible, since the performance of the part derives from the engineering design. In the FEA design, the fiber orientations of each ply can be specified at any part of the ply, particularly where the orientations may change as the part being designed has curves or distortions or otherwise fails to be a simple plane or single curvature panel.

However, due to communication constraints, the designer only gets a very simplified view of the CAE design, in which regions of the part are defined to have a given number of plies and the orientations are given very imprecisely, as in simply 0/+45/-45/90 for the degrees of orientation of the material in the plies as a whole. This can lead to large errors as the designer is forced to make assumptions about the intent as the designer can only explicitly define the orientations at a given location, such as the point at which ply buildup is to begin, and the result will rarely follow the fiber orientations assumed by FEA due to the natural tendency of the material to get distorted as it conforms to the part curvature.

A field rosette as disclosed herein allows the designer to work with the specified/assumed fiber orientations that come from external sources such as FEA. Orientation data that is embedded in a point cloud, such as that which can be derived from an FEA mesh, is managed and displayed within the composite design environment to allow the designer to make comparisons and measurements of the design relative to the specifications in the point cloud. In other cases, the designer could also base the design off of the orientations provided in the point cloud.

The fiber orientation field orientation at a given point (the "origin") can be used to give a starting point for a draping simulation. In various implementations, a draping simulation can use the field rosettes as an input and automatically minimize the difference between the engineering and designer's definitions. The field rosette thus enables a powerful exploration of the design space and can be of great help in achieving a design that is much closer to the original intent than has previously been possible.

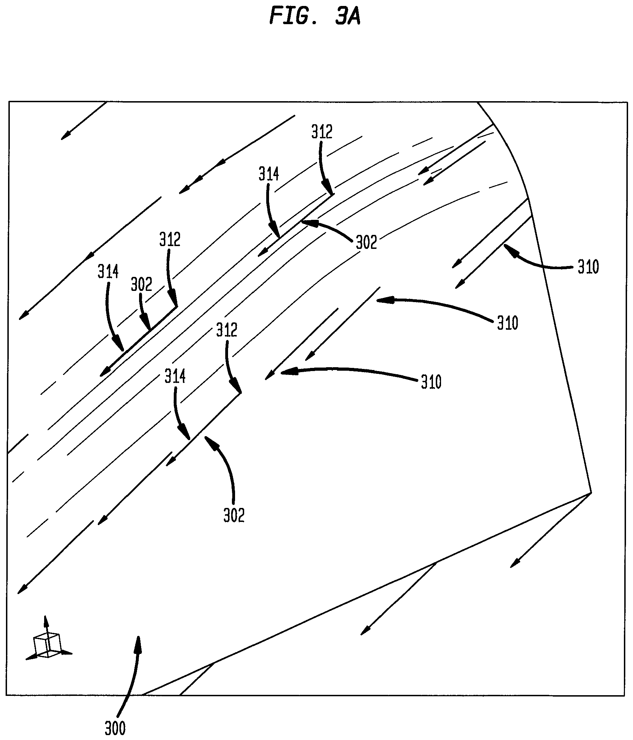

Figure 3A illustrates a first fiber orientation field 310 of reference orientations, indicated by a plurality of field rosettes 302, on a manufacturable part 300. Each field rosette 302, that is, each data point in the fiber orientation field, has a reference point 312 (the endpoint of each arrow) and a direction vector 314 (represented by the arrow). Such a fiber orientation field can derive from any source, such as simple coordinate system mappings, but can also come from measurements from manufactured parts or ply/course layup/draping simulations, and often are derived from the material coordinate systems of FEA elements. The direction vector of each field rosette 302 indicates the reference orientation of the 0 direction at the corresponding point, and the plurality of reference orientations comprises the first fiber orientation field. In this example, the first fiber orientation field represents the part 300 as it is designed in the FEA system.

In many cases, such as when a fiber orientation field is received from manufacturing measurements, the fiber orientation field will not be continuous, but will be a collection of discrete points. In other cases, a fiber orientation field that is represented as continuous information from manufacturing may be broken down to discrete points at some point in the process. Each of these points can be represented by a field rosette as described herein. Further, each field rosette can define the fiber orientations for a curve, and therefore act as a spine-based rosette, as described in United States Patent Publication US 20130231902 A1, titled "Spine-Based Rosette and Simulation In Fiber-Composite Materials," incorporated herein by reference.

"Mapping" of a field rosette refers to assigning field rosette directions to specific points on the tool/part, based on the FEA, manufactured part analysis, an interpolation of other field rosettes, or otherwise. Field rosette mapping can include calculating the rosette zero fiber direction (or some rotation thereof) for any point on the part based on the limited data provided for the rosette. This can include cases where the data is a single point on the part and a direction and cases where spine-based mapping is used to define rosette zero fiber directions along a curve. Disclosed embodiments preferably use the fiber orientation field data for mapping, where the fiber orientation field is a point cloud with the fiber 0 direction associated with each point.

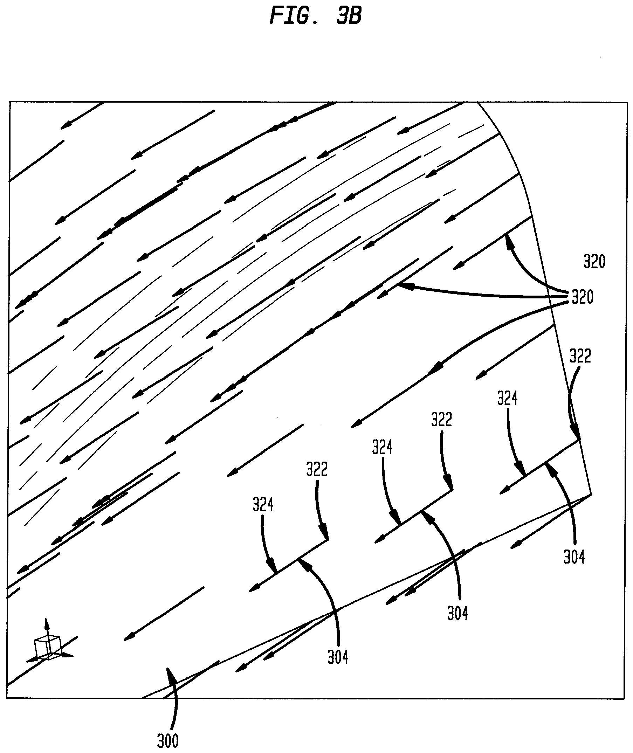

Figure 3B illustrates a second fiber orientation field 320 of reference orientations, indicated by field rosette 304, on a part 300. Each field rosette 304 has a reference point 322 (the endpoint of each arrow) and a direction vector 324 (represented by the arrow). Such a fiber orientation field can derive from any source, such as simple coordinate system mappings, but can also come from measurements from manufactured parts or ply/course layup/draping simulations, and often are derived from the material coordinate systems of FEA elements. The direction vector of each field rosette 304 indicates the reference orientation of the 0 direction at the corresponding point, and the plurality of reference orientations comprises the second fiber orientation field. In this example, the second fiber orientation field represents the part 300 as it is being manufactured.

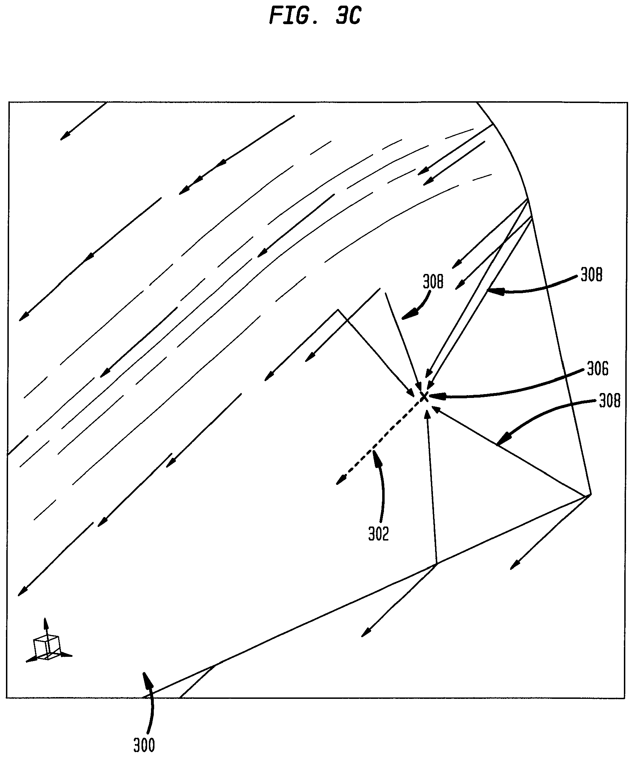

Figure 3C illustrates an interpolation of the first fiber orientation field at an arbitrary point 306. Field rosette 302, as above, indicates the reference orientation (0 direction) for point 306. The other arrows 308 demonstrate the combination of information from nearby/relevant points in the provided fiber orientation field that can be used to interpolate or otherwise determine the rosette direction at an arbitrary point. The exact method of interpolation can vary. In some cases, an interpolated field rosette can be determined according to the closest (already-known) field rosette. In other cases, the system can use the part geometry to find the one or more field rosettes that are the closest in geodesic terms and use a weighted average to get the result. Since the fiber orientation field as received may not include a field rosette reference point at the needed location on the part, the system can interpolate a field rosette reference point at that location.

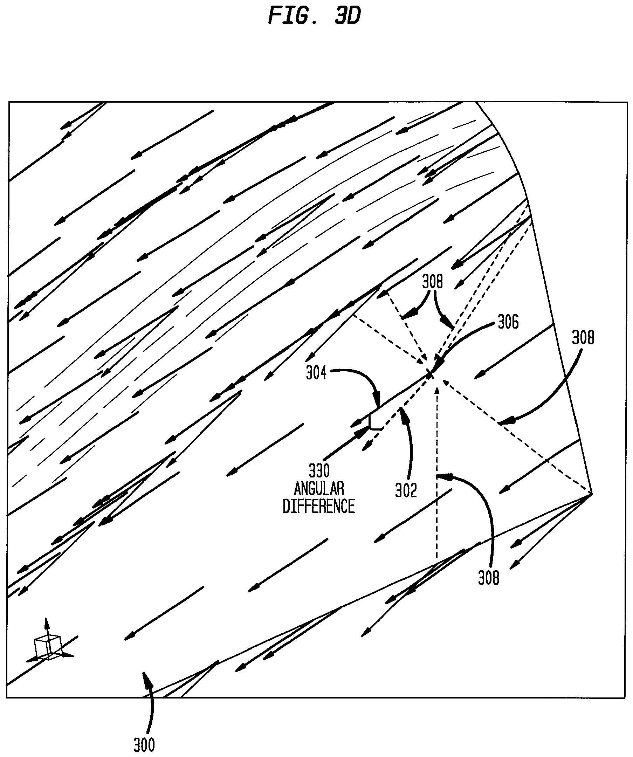

Figure 3D illustrates a comparison of the first fiber orientation field and the second fiber orientation field, with particular reference to point 306 (the corresponding point on both the first fiber orientation field and second fiber orientation field). As can be seen, there is an angular fiber orientation difference 330 in the reference orientation between the first fiber orientation field as represented by field rosette 302 and the second fiber orientation field as represented by field rosette 304. The other arrows 308 demonstrate the combination of information from nearby/relevant points in the provided fiber orientation field that can be used to interpolate or otherwise determine the rosette direction at an arbitrary point, as described above. Figure 3D illustrates that the system can compare fiber orientation fields even if the provided rosette locations do not exactly match up, by finding a field rosette at any given location using interpolation techniques as described. In this way, the system can perform this comparison at any arbitrary point, without being limited to using a location that is provided in either the first or second fiber orientation fields. The system can also display or produce a report of the orientation difference(s) detected between the first fiber orientation field and the second fiber orientation field for the part; one form of report may be a graphical indication such as displaying angular fiber orientation difference 330.

For any given ply, the system can measure the deviation of the reinforcement fibers with respect to the specified orientations in the field rosette, as indicated by angular difference 310, to ensure that the deviation does not exceed the given design limits.

If the source of the field rosette data is a finite element model, then the finite element output for a given analysis on a given composite part, usually consisting of one field rosette vector per finite element, is read and stored as field rosettes by the system. For a given finite element, the field rosette data as at least consists of the location of the finite element centroid, used as a reference point, and the corresponding direction vector. The field rosette data may also include the corresponding normal vector or other vectors or data.

The finite element output for a given analysis may consist of field rosette data for only a subset of finite elements, as in the case where the data is considered critical only for that subset, defining a fiber orientation field for only that subset.

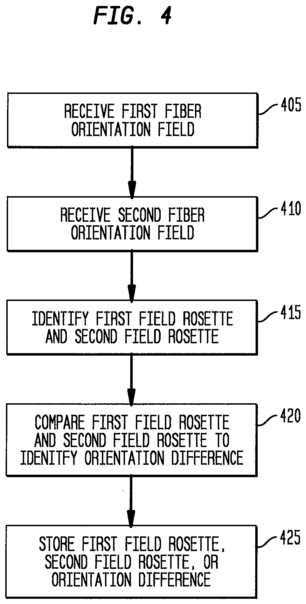

Figure 4 illustrates a flowchart of a process in accordance with disclosed embodiments. Such a process can be performed by one or more data processing systems, such as data processing system 100, and in particular can be performed by a PDM system.

The system receives a first fiber orientation field corresponding to a manufacturable part (405). "Receiving," as used herein, can include loading from storage, receiving from another device or process, generating one or another of the fiber orientation fields, or receiving via an interaction with a user. The first fiber orientation field is comprised of a plurality of field rosettes each having a reference point, a corresponding direction vector, and optionally other information related to the reference point. The part can be, for example, a part of an assembly, such as a stringer, spar, or other structure, and preferably represents a part to be manufactured using fiber composite materials. In some embodiments, the first fiber orientation field is received from a finite element model of the part.

The system receives a second fiber orientation field corresponding to the part (410). The second fiber orientation field is also comprised of a plurality of field rosettes each having a reference point, a corresponding direction vector, and optionally other information related to the reference point. In some embodiments, the second fiber orientation field is received as simulated or physical measurements of the part as manufactured or as a CAE representation of the part. In some cases, the second fiber orientation field is generated as a draping simulation from the first fiber orientation field.

The system identifies a first field rosette in the first fiber orientation field and a second field rosette in the second fiber orientation field that have corresponding reference points on the manufacturable part (415), for example as the reference points of field rosettes 302 and 304. This step can be performed to identify a plurality of pairs of field rosettes. Each field rosette can correspond to a single finite element in FEA-based fiber orientation fields. As part of this process, the system identifies a point where it will compare the two fiber orientation fields, which does not have to be a point provided in either fiber orientation field. The system can then calculate/interpolate a field rosette for that point from the first fiber orientation field and another from the second fiber orientation field. These calculated field rosettes are then compared as below. The system can identify the point, in some cases, by receiving a user selection of such a point. Identifying the first field rosette can include interpolating the first field rosette from at least one other field rosette in the first fiber orientation field.

The system compares the first field rosette to the second field rosette to identify a fiber orientation difference between the first fiber orientation field and the second fiber orientation field at the corresponding reference point (420). The orientation difference can be identified, for example, as an angular difference.

The system can store the first rosette, the second rosette, or the orientation difference as associated with the manufacturable part (425). These can be stored, for example, with the respective fiber orientation fields, with other metadata or parameters for the part, or otherwise. As part of this step, the system can also display or produce a report of the orientation differences detected between the first fiber orientation field and the second fiber orientation field for the part.

The system can repeat steps 415, 420, and 425 for multiple field rosette pairs in the first and second fiber orientation fields to identify fiber orientation differences at many points in the part as represented by the first fiber orientation field and the second fiber orientation field.

In the case of design validation, simulated draped orientations can be compared with the field rosette orientations. Orientation deviations above design specifications can then be highlighted to the user.

In the case of manufacturing validation, the as-manufactured orientations can be read and stored as a field rosette by the system as either the first fiber orientation field or the second fiber orientation field. The as-manufactured field rosette orientations can then be compared with either the FEA field rosette orientations or the as-designed orientations, either of which can be used as the other fiber orientation field for comparison. Orientation deviations above the design specifications can then be highlighted to the user. For a given location on a composite part, the composite part designer can measure the deviation between the reinforcement fibers and the field rosette mapped vector.

Disclosed embodiments provide significant technical advantages over other systems. Some composite part design systems support only three types of rosette mappings: cartesian, cylindrical, or radial. All three map a single rosette location and direction onto other locations on the tool surface. Structural FEA of composite parts output does not consist of a single location and direction but of a different directions at each finite element. Therefore, mapping a single direction introduces significant inaccuracies into the composite part design process.

Disclosed embodiments can map to one direction per location onto the tool surface of the composite part, and including also a normal or other information. Thus, this approach maintains the fidelity of the fiber orientation field representation. If a denser fiber orientation field is used, the orientation differences can also reflect the finer granularity.

Disclosed embodiments allow an FEA output to optionally communicate only the finite elements it considers critical to the FEA representation. This enables FEA to give design more flexibility where appropriate, and allow for decreasing in the amount of data that needs to be exchanged. Critical structural regions can also be defined by grouping them into regions or groups that define which are most important and which are not important.

For those locations that do not have exact correspondence to the discrete locations in the field rosette data, so there is not a precise correspondence between the first fiber orientation field and the second fiber orientation field, disclosed embodiments can use barycentric approximation or other techniques to map the fiber directions.

Using a fiber orientation field based CAE rosette mapping, design engineers can compare simulated draped ply/layer fiber deviations and orientations with the actual orientations defined by the FEA analyst. This enables designers to alert FEA analysts to discrepancies in the design much earlier in the product development process.

Using a field rosette as disclosed herein, design engineers can validate that the deviation of as-manufactured orientations from prescribed FEA orientations do not exceed design specifications.

Of course, those of skill in the art will recognize that, unless specifically indicated or required by the sequence of operations, certain steps in the processes described above may be omitted, performed concurrently or sequentially, or performed in a different order. In particular, various steps can be performed concurrently in multi-threaded processes.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A method performed by one or more data processing systems for determining differences in fiber orientations for designs of fiber composite manufacturable parts (300), comprising:
a1) receiving (405) a first fiber orientation field (310), in a data processing system (100), corresponding to a fiber-composite manufacturable part (300), the first fiber orientation field having a plurality of field rosettes (302) each having a reference point (312) and a corresponding direction vector (314),
a2) wherein a field rosette corresponds to data that defines a fiber orientation at a particular reference point on a model, simulation, or as manufactured measurements of the fiber-composite manufacturable part (300);
b) receiving (410) a second fiber orientation field (320), in the data processing system, corresponding to the fiber-composite manufacturable part (300), the second fiber orientation field also having a plurality of field rosettes (304) each having a reference point (322) and a corresponding direction vector (324);
c1) identifying (415) a first field rosette (302) in the first fiber orientation field (310) and a second field rosette (304) in the second fiber orientation field (320) that have corresponding reference points (312/322) on the manufacturable part (300),
c2) said identifying including the interpolating of at least one of the first field rosette or the second field rosette from at least one other field rosette in the respective first fiber orientation field (310) or second fiber orientation field;
d) comparing (420) the first field rosette (302) to the second field rosette (304) to identify a fiber orientation difference (330) between the first fiber orientation field (310) and the second fiber orientation field (320) at the corresponding reference point (312/322); and
e1) storing (425) the fiber orientation difference (330) as associated with the manufacturable part (300),
e2) said storing being performed such that the fiber orientation difference is usable to alert a user to discrepancies in fiber orientations between a model of the manufacturable part (300) and as manufactured measurements of the manufacturable part, which exceed design specifications;
e3) wherein the first fiber orientation field (310) is received from a finite element model of the manufacturable part (300); and
e4) wherein the second fiber orientation field (320) is received as measurements of the manufacturable part (300) as manufactured; wherein
e5) in said step e2) the fiber orientation differences are compared with the design specifications and the fiber orientation differences (330) above the design specifications are displayed to the user to validate that the deviation of as-manufactured orientations from prescribed finite element orientations do not exceed the design specifications;

2. The method according to claim 1, wherein the fiber orientation difference (330) is identified as an angular difference and identifying the first field rosette (302) includes interpolating the first field rosette (302) from at least one other field rosette in the first fiber orientation field (310).

3. The method of one of the claims 1 to 2, wherein each field rosette (302) of the first fiber orientation field (310) corresponds to a single finite element in a finite-element-analysis-based fiber orientation field.

4. The method of one of the claims 1 to 3, wherein the identifying (415), comparing (420), and storing (425) actions are repeated for a plurality of pairs of first field rosettes and second field rosettes.

5. The method of one of the claims 1 to 4, wherein the data processing system (100) also produces a report that highlights at least one orientation difference (300) that exceeds a design specification.

6. A data processing system (100) for determining differences in fiber orientations for designs of fiber composite manufacturable parts, comprising:
i) a processor (102); and
ii) an accessible memory (108), the data processing system configured to
a1) receive (405) a first fiber orientation field (310), in a data processing system (100), corresponding to a fiber-composite manufacturable part (300), the first fiber orientation field having a plurality of field rosettes (302) each having a reference point (312) and a corresponding direction vector (314),
a2) wherein a field rosette corresponds to data that defines a fiber orientation at a particular reference point on a model, simulation, or as manufactured measurements of the fiber-composite manufacturable part (300);
b) receive (410) a second fiber orientation field (320), in the data processing system, corresponding to the fiber-composite manufacturable part (300), the second fiber orientation field also having a plurality of field rosettes (304) each having a reference point (322) and a corresponding direction vector (324);
c1) identify (415) a first field rosette (302) in the first fiber orientation field (310) and a second field rosette (304) in the second fiber orientation field (320) that have corresponding reference points (312/322) on the manufacturable part (300),
c2) said identifying including the interpolating of at least one of the first field rosette or the second field rosette from at least one other field rosette in the respective first fiber orientation field (310) or second fiber orientation field;
d) compare (420) the first field rosette (302) to the second field rosette (304) to identify a fiber orientation difference (330) between the first fiber orientation field (310) and the second fiber orientation field (320) at the corresponding reference point (312/322); and
e1) store (425) the fiber orientation difference (330) as associated with the manufacturable part (300),
e2) said storing being performed such that the fiber orientation difference is usable to alert a user to discrepancies in fiber orientations between a model of the manufacturable part (300) and as manufactured measurements of the manufacturable part, which exceed design specifications;
e3) wherein the first fiber orientation field (310) is received from a finite element model of the manufacturable part (300); and
e4) wherein the second fiber orientation field (320) is received as measurements of the manufacturable part (300) as manufactured; wherein
e5) in said step e2) the fiber orientation differences are compared with the design specifications and the fiber orientation differences (330) above the design specifications are displayed to the user to validate that the deviation of as-manufactured orientations from prescribed finite element orientations do not exceed the design specifications;

7. The data processing system of claim 6, wherein the fiber orientation difference (330) is identified as an angular difference and identifying the first field rosette (302) includes interpolating the first field rosette (302) from at least one other field rosette in the first fiber orientation field (310).

8. The data processing system of one of the claims 6 to 7, wherein each field rosette (302) of the first fiber orientation field (310) corresponds to a single finite element in a finite-element-analysis-based fiber orientation field.

9. The data processing system of one of the claims 6 to 8, wherein the identifying (415), comparing (420), and storing (425) actions are repeated for a plurality of pairs of first field rosettes and second field rosettes.

10. The data processing system of one of the claims 6 to 9, wherein the data processing system (100) also produces a report that highlights at least one orientation difference (300) that exceeds a design specification.

11. A non-transitory machine-readable medium (126) encoded with executable instructions that, when executed, cause at least one data processing system (100) to carry out a method of determining discrepancies in fiber orientations for designs of fiber composite manufacturable parts according to one or more of claims 1-5.

## Patentansprüche

1. Verfahren, das durch ein oder mehrere Datenverarbeitungssysteme zum Bestimmen von Unterschieden in Faserausrichtungen für Designs von herstellbaren Faserverbundteilen (300) ausgeführt wird und Folgendes umfasst:
a1) Empfangen (405) eines ersten Faserausrichtungsfelds (310) in einem Datenverarbeitungssystem (100), das einem herstellbaren Faserverbundteil (300) entspricht, wobei das erste Faserausrichtungsfeld mehrere Feldrosetten (302) besitzt, die jeweils einen Referenzpunkt (312) und einen entsprechenden Richtungsvektor (314) besitzen,
a2) wobei eine Feldrosette Daten entspricht, die eine Faserausrichtung an einem bestimmten Referenzpunkt auf einem Modell, einer Simulation oder Maße wie hergestellt des herstellbaren Faserverbundteils (300) definieren;
b) Empfangen (410) eines zweiten Faserausrichtungsfelds (320) in dem Datenverarbeitungssystem, das dem herstellbaren Faserverbundteil (300) entspricht, wobei das zweite Faserausrichtungsfeld auch mehrere Feldrosetten (304) besitzt, die jeweils einen Referenzpunkt (322) und einen entsprechenden Richtungsvektor (324) besitzen,
c1) Identifizieren (415) einer ersten Feldrosette (302) in dem ersten Faserausrichtungsfeld (310) und einer zweiten Feldrosette (304) in dem zweiten Faserausrichtungsfeld (320), die entsprechende Referenzpunkte (312/322) auf dem herstellbaren Teil (300) besitzen,
c2) wobei das Identifizieren das Interpolieren der ersten Feldrosette und/oder der zweiten Feldrosette von mindestens einer anderen Feldrosette in dem jeweiligen ersten Faserausrichtungsfeld (310) oder zweiten Faserausrichtungsfeld enthält;
d) Vergleichen (420) der ersten Feldrosette (302) mit der zweiten Feldrosette (304), um einen Faserausrichtungsunterschied (330) zwischen dem ersten Faserausrichtungsfeld (310) und dem zweiten Faserausrichtungsfeld (320) an dem entsprechenden Referenzpunkt (312/322) zu identifizieren; und
e1) Speichern (425) des Faserausrichtungsunterschieds (330) als dem herstellbaren Teil (300) zugeordnet,
e2) wobei das Speichern derart ausgeführt wird, dass der Faserausrichtungsunterschied verwendbar ist, um einen Anwender über Unterschiede der Faserausrichtungen zwischen einem Modell des herstellbaren Teils (300) und den Maßen wie hergestellt des herstellbaren Teils, die Designspezifikationen überschreiten, zu alarmieren;
e3) wobei das erste Faserausrichtungsfeld (310) von einem Finite-Elemente-Modell des herstellbaren Teils (300) empfangen wird; und
e4) wobei das zweite Faserausrichtungsfeld (320) als Maße des herstellbaren Teils (300) wie hergestellt empfangen wird; wobei
e5) in Schritt e2) die Faserausrichtungsunterschiede mit den Designspezifikationen verglichen werden und die Faserausrichtungsunterschiede (330) über den Designspezifikationen für den Anwender angezeigt werden, um zu validieren, dass die die Abweichung von wie hergestellten Ausrichtungen von vorgeschriebenen Finite-Elemente-Ausrichtungen die Designspezifikationen nicht überschreiten.

2. Verfahren nach Anspruch 1, wobei der Faserausrichtungsunterschied (330) als ein Winkelunterschied identifiziert wird und das Identifizieren der ersten Feldrosette (302) enthält, die erste Feldrosette (302) von mindestens einer anderen Feldrosette in dem ersten Faserausrichtungsfeld (310) zu interpolieren.

3. Verfahren nach einem der Ansprüche 1 bis 2, wobei jede Feldrosette (302) des ersten Faserausrichtungsfelds (310) einem einzigen finiten Element in einem auf einer Finite-Elemente-Analyse beruhenden Faserausrichtungsfeld entspricht.

4. Verfahren nach einem der Ansprüche 1 bis 3, wobei die Identifizierungs- (415), Vergleichs- (420) und Speicherhandlungen (425) für mehrere Paare erster Feldrosetten und zweiter Feldrosetten wiederholt werden.

5. Verfahren nach einem der Ansprüche 1 bis 4, wobei das Datenverarbeitungssystem (100) außerdem einen Bericht erzeugt, der mindestens einen Ausrichtungsunterschied (300), der eine Designspezifikation überschreitet, hervorhebt.

6. Datenverarbeitungssystem (100) zum Bestimmen von Unterschieden in Faserausrichtungen für Designs von herstellbaren Faserverbundteilen, das Folgendes umfasst:
i) einen Prozessor (102); und
ii) einen zugänglichen Speicher (108), wobei das Datenverarbeitungssystem konfiguriert ist zum:
a1) Empfangen (405) eines ersten Faserausrichtungsfelds (310) in einem Datenverarbeitungssystem (100), das einem herstellbaren Faserverbundteil (300) entspricht, wobei das erste Faserausrichtungsfeld mehrere Feldrosetten (302) besitzt, die jeweils einen Referenzpunkt (312) und einen entsprechenden Richtungsvektor (314) besitzen,
a2) wobei eine Feldrosette Daten entspricht, die eine Faserausrichtung an einem bestimmten Referenzpunkt auf einem Modell, einer Simulation oder Maße wie hergestellt des hergestellten Faserverbundteils (300) definieren;
b) Empfangen (410) eines zweiten Faserausrichtungsfelds (320) in dem Datenverarbeitungssystem, das dem herstellbaren Faserverbundteil (300) entspricht, wobei das zweite Faserausrichtungsfeld auch mehrere Feldrosetten (304) besitzt, die jeweils einen Referenzpunkt (322) und einen entsprechenden Richtungsvektor (324) besitzen,
c1) Identifizieren (415) einer ersten Feldrosette (302) in dem ersten Faserausrichtungsfeld (310) und einer zweiten Feldrosette (304) in dem zweiten Faserausrichtungsfeld (320), die entsprechende Referenzpunkte (312/322) auf dem herstellbaren Teil (300) besitzen,
c2) wobei das Identifizieren das Interpolieren der ersten Feldrosette und/oder der zweiten Feldrosette von mindestens einer anderen Feldrosette in dem jeweiligen ersten Faserausrichtungsfeld (310) oder zweiten Faserausrichtungsfeld enthält;
d) Vergleichen (420) der ersten Feldrosette (302) mit der zweiten Feldrosette (304), um einen Faserausrichtungsunterschied (330) zwischen dem ersten Faserausrichtungsfeld (310) und dem zweiten Faserausrichtungsfeld (320) an dem entsprechenden Referenzpunkt (312/322) zu identifizieren; und
e1) Speichern (425) des Faserausrichtungsunterschieds (330) als dem herstellbaren Teil (300) zugeordnet,
e2) wobei das Speichern derart ausgeführt wird, dass der Faserausrichtungsunterschied verwendbar ist, um einen Anwender über Unterschiede der Faserausrichtungen zwischen einem Modell des herstellbaren Teils (300) und Maßen wie hergestellt des herstellbaren Teils, die Designspezifikationen überschreiten, zu alarmieren;
e3) wobei das erste Faserausrichtungsfeld (310) von einem Finite-Elemente-Modell des herstellbaren Teils (300) empfangen wird; und
e4) wobei das zweite Faserausrichtungsfeld (320) als Maße des herstellbaren Teils (300) wie hergestellt empfangen wird; wobei
e5) in Schritt e2) die Faserausrichtungsunterschiede mit den Designspezifikationen verglichen werden und die Faserausrichtungsunterschiede (330) über den Designspezifikationen für den Anwender angezeigt werden, um zu validieren, dass die Abweichung von wie hergestellten Ausrichtungen von den vorgeschriebenen Finite-Elemente-Ausrichtungen die Designspezifikationen nicht überschreiten.

7. Datenverarbeitungssystem nach Anspruch 6, wobei der Faserausrichtungsunterschied (330) als ein Winkelunterschied identifiziert wird und das Identifizieren der ersten Feldrosette (302) enthält, die erste Feldrosette (302) von mindestens einer anderen Feldrosette in dem ersten Faserausrichtungsfeld (310) zu interpolieren.

8. Datenverarbeitungssystem nach einem der Ansprüche 6 bis 7, wobei jede Feldrosette (302) des ersten Faserausrichtungsfelds (310) einem einzigen finiten Element in einem auf einer Finite-Elemente-Analyse beruhenden Faserausrichtungsfeld entspricht.

9. Datenverarbeitungssystem nach einem der Ansprüche 6 bis 8, wobei die Identifizierungs- (415), Vergleichs- (420) und Speicherhandlungen (425) für mehrere Paare erster Feldrosetten und zweiter Feldrosetten wiederholt werden.

10. Datenverarbeitungssystem nach einem der Ansprüche 6 bis 9, wobei das Datenverarbeitungssystem (100) außerdem einen Bericht erzeugt, der mindestens einen Ausrichtungsunterschied (300), der eine Designspezifikation überschreitet, hervorhebt.

11. Nicht transitorisches maschinenlesbares Medium (126), das mit ausführbaren Anweisungen codiert ist, die dann, wenn sie ausgeführt werden, bewirken, dass mindestens ein Datenverarbeitungssystem (100) ein Verfahren zum Bestimmen von Unterschieden in Faserausrichtungen für Designs von herstellbaren Faserverbundteilen nach einem der Ansprüche 1-5 ausführt.

## Revendications

1. Procédé effectué par un ou plusieurs systèmes de traitement de données pour déterminer des différences dans des orientations de fibres pour des conceptions de pièces composites fibreuses manufacturables (300), comprenant :
a1) la réception (405), dans un système de traitement de données (100), d'un premier champ d'orientation de fibres (310) correspondant à une pièce composite fibreuse manufacturable (300), le premier champ d'orientation de fibres ayant une pluralité de rosettes de champ (302) ayant chacune un point de référence (312) et un vecteur de direction correspondant (314),
a2) dans lequel une rosette de champ correspond à des données qui définissent une orientation de fibres à un point de référence particulier sur un modèle, une simulation, ou des mesures brutes de fabrication de la pièce composite fibreuse manufacturable (300) ;
b) la réception (410), dans le système de traitement de données, d'un deuxième champ d'orientation de fibres (320) correspondant à la pièce composite fibreuse manufacturable (300), le deuxième champ d'orientation de fibres ayant également une pluralité de rosettes de champ (304) ayant chacune un point de référence (322) et un vecteur de direction correspondant (324) ;
c1) l'identification (415) d'une première rosette de champ (302) dans le premier champ d'orientation de fibres (310) et d'une deuxième rosette de champ (304) dans le deuxième champ d'orientation de fibres (320) qui ont des points de référence correspondants (312/322) sur la pièce manufacturable (300),
c2) ladite identification comportant l'interpolation de la première rosette de champ et/ou de la deuxième rosette de champ à partir d'au moins une autre rosette de champ dans le premier champ d'orientation de fibres (310) ou le deuxième champ d'orientation de fibres respectif ;
d) la comparaison (420) de la première rosette de champ (302) avec la deuxième rosette de champ (304) pour identifier une différence d'orientation de fibres (330) entre le premier champ d'orientation de fibres (310) et le deuxième champ d'orientation de fibres (320) au point de référence correspondant (312/322) ; et
e1) le stockage (425) de la différence d'orientation de fibres (330) telle qu'associée à la pièce manufacturable (300),
e2) ledit stockage étant effectué de telle sorte que la différence d'orientation de fibres est utilisable pour alerter un utilisateur sur des différences dans des orientations de fibres entre un modèle de la pièce manufacturable (300) et des mesures brutes de fabrication de la pièce manufacturable qui dépassent des spécifications de conception,
e3) dans lequel le premier champ d'orientation de fibres (310) est reçu depuis un modèle d'éléments finis de la pièce manufacturable (300), et
e4) dans lequel le deuxième champ d'orientation de fibres (320) est reçu sous forme de mesures de la pièce manufacturable (300) brute de fabrication, dans lequel
e5) à ladite étape e2), les différences d'orientation de fibres sont comparées avec les spécifications de conception et les différences d'orientation de fibres (330) supérieures aux spécifications de conception sont affichées pour l'utilisateur pour valider le fait que l'écart entre des orientations brutes de fabrication et des orientations d'éléments finis prescrites ne dépasse pas les spécifications de conception.

2. Procédé selon la revendication 1, dans lequel la différence d'orientation de fibres (330) est identifiée comme une différence angulaire et l'identification de la première rosette de champ (302) comporte l'interpolation de la première rosette de champ (302) à partir d'au moins une autre rosette de champ dans le premier champ d'orientation de fibres (310).

3. Procédé d'une des revendications 1 à 2, dans lequel chaque rosette de champ (302) du premier champ d'orientation de fibres (310) correspond à un seul élément fini dans un champ d'orientation de fibres basé sur une analyse par éléments finis.

4. Procédé d'une des revendications 1 à 3, dans lequel les actions d'identification (415), de comparaison (420) et de stockage (425) sont répétées pour une pluralité de paires de premières rosettes de champ et deuxièmes rosettes de champ.

5. Procédé d'une des revendications 1 à 4, dans lequel le système de traitement de données (100) produit également un rapport qui met en lumière au moins une différence d'orientation (300) qui dépasse une spécification de conception.

6. Système de traitement de données (100) destiné à déterminer des différences dans des orientations de fibres pour des conceptions de pièces composites fibreuses manufacturables, comprenant :
i) un processeur (102) ; et
ii) une mémoire accessible (108), le système de traitement de données étant configuré pour
a1) recevoir (405), dans un système de traitement de données (100), un premier champ d'orientation de fibres (310) correspondant à une pièce composite fibreuse manufacturable (300), le premier champ d'orientation de fibres ayant une pluralité de rosettes de champ (302) ayant chacune un point de référence (312) et un vecteur de direction correspondant (314),
a2) dans lequel une rosette de champ correspond à des données qui définissent une orientation de fibres à un point de référence particulier sur un modèle, une simulation, ou des mesures brutes de fabrication de la pièce composite fibreuse manufacturable (300) ;
b) recevoir (410), dans le système de traitement de données, un deuxième champ d'orientation de fibres (320) correspondant à la pièce composite fibreuse manufacturable (300), le deuxième champ d'orientation de fibres ayant également une pluralité de rosettes de champ (304) ayant chacune un point de référence (322) et un vecteur de direction correspondant (324) ;
c1) identifier (415) une première rosette de champ (302) dans le premier champ d'orientation de fibres (310) et une deuxième rosette de champ (304) dans le deuxième champ d'orientation de fibres (320) qui ont des points de référence correspondants (312/322) sur la pièce manufacturable (300),
c2) ladite identification comportant l'interpolation de la première rosette de champ et/ou de la deuxième rosette de champ à partir d'au moins une autre rosette de champ dans le premier champ d'orientation de fibres (310) ou le deuxième champ d'orientation de fibres respectif ;
d) comparer (420) la première rosette de champ (302) avec la deuxième rosette de champ (304) pour identifier une différence d'orientation de fibres (330) entre le premier champ d'orientation de fibres (310) et le deuxième champ d'orientation de fibres (320) au point de référence correspondant (312/322) ; et
e1) stocker (425) la différence d'orientation de fibres (330) telle qu'associée à la pièce manufacturable (300),
e2) ledit stockage étant effectué de telle sorte que la différence d'orientation de fibres est utilisable pour alerter un utilisateur sur des différences dans des orientations de fibres entre un modèle de la pièce manufacturable (300) et des mesures brutes de fabrication de la pièce manufacturable qui dépassent des spécifications de conception,
e3) dans lequel le premier champ d'orientation de fibres (310) est reçu depuis un modèle d'éléments finis de la pièce manufacturable (300), et
e4) dans lequel le deuxième champ d'orientation de fibres (320) est reçu sous forme de mesures de la pièce manufacturable (300) brute de fabrication, dans lequel
e5) à ladite étape e2), les différences d'orientation de fibres sont comparées avec les spécifications de conception et les différences d'orientation de fibres (330) supérieures aux spécifications de conception sont affichées pour l'utilisateur pour valider le fait que l'écart entre des orientations brutes de fabrication et des orientations d'éléments finis prescrites ne dépasse pas les spécifications de conception.

7. Système de traitement de données de la revendication 6, dans lequel la différence d'orientation de fibres (330) est identifiée comme une différence angulaire et l'identification de la première rosette de champ (302) comporte l'interpolation de la première rosette de champ (302) à partir d'au moins une autre rosette de champ dans le premier champ d'orientation de fibres (310).

8. Système de traitement de données d'une des revendications 6 à 7, dans lequel chaque rosette de champ (302) du premier champ d'orientation de fibres (310) correspond à un seul élément fini dans un champ d'orientation de fibres basé sur une analyse par éléments finis.

9. Système de traitement de données d'une des revendications 6 à 8, dans lequel les actions d'identification (415), de comparaison (420) et de stockage (425) sont répétées pour une pluralité de paires de premières rosettes de champ et deuxièmes rosettes de champ.

10. Système de traitement de données d'une des revendications 6 à 9, le système de traitement de données (100) produisant également un rapport qui met en lumière au moins une différence d'orientation (300) qui dépasse une spécification de conception.

11. Support non transitoire lisible par machine (126) codé avec des instructions exécutables qui, lorsqu'elles sont exécutées, conduisent au moins un système de traitement de données (100) à réaliser un procédé de détermination de différences dans des orientations de fibres pour des conceptions de pièces composites fibreuses manufacturables selon une ou plusieurs des revendications 1 à 5.
